# EUROPEAN PATENT APPLICATION

(11) **EP 2 114 105 A2**
(43) Date of publication of application: **04.11.2009**
(21) Application number: 08171655.7
(22) Date of filing: 15.12.2008
(51) Int. Cl.: H04W 68/00

(54) **Mobile Wireless Communication System and Wireless Base Station**

(30) Priority: 01.05.2008 JP 2008119976
(71) Applicant: Fujitsu Ltd., Kawasaki-shi, Kanagawa 211-8588 (JP)
(72) Inventor: Iwasa, Masaru, Kawasaki-shi, Kanagawa 211-8588 (JP); Tomita, Tetsuo, Kawasaki-shi, Kanagawa 211-8588 (JP); Ito, Mikio, Kawasaki-shi, Kanagawa 211-8588 (JP); Miura, Yoshio, Kawasaki-shi, Kanagawa 211-8588 (JP)
(74) Representative: Holtby, Christopher Lawrence

(57) **Abstract**

A mobile wireless communication system includes: a wireless base station that controls, for each timing, a transmission state of a radio wave repeatedly transmitted at timings that respectively differ; and a plurality of wireless mobile devices that are respectively allocated one of the timings, receive the radio wave at the timing allocated, and based on the radio wave received, respectively detect a connection destination. The wireless base station controls the transmission state of the radio wave transmitted at an arbitrary timing to be any one of a complete suspension state of continuously suspending transmission, a discontinuous suspension state of discontinuously suspending transmission, and an invalid information transmission state of transmitting invalid information.

## Description

### CROSS-REFERENCE TO RELATED APPLICATIONS

This application is based upon and claims the benefit of priority from the prior Japanese Patent Application No. 2008-119976, filed on May 1, 2008, the entire contents of which are incorporated herein by reference.

### BACKGROUND OF THE INVENTION

### 1. Field of the Invention

The present invention relates to a wireless mobile communication system and a wireless base station.

### 2. Description of the Related Art

In mobile wireless communication systems, a wireless mobile device must again search for a radio wave from a communicable wireless base station to detect a useable cell when the wireless mobile device moves. Further, while the wireless mobile device is waiting to receive communications, operations for detecting a cell having the smallest loss are performed. These operations are referred to as cell reselection, while detection of a cell is referred to as a cell search. For example, a method of registering the position of a paging wireless mobile device has been disclosed in Japanese Patent Application Laid-Open Publication No. H5-276100. The method involves a step where a wireless-page-receiving unit selects the best paging channel from among plural paging channels; a step where a wireless-call-transceiving unit is operated to select and record the best wireless channel of a wireless base station when the selected paging channel and the paging channel used up until the selection are different; and a step where, by transmitting through the recorded wireless channel, it is determined to which wireless paging area the wireless base station belongs and the number of the paging base station of the wireless paging area is recorded as a position registering signal.

Further, when there is an imbalance in the load placed upon each wireless base station as a result of wireless mobile device movement, countermeasures against the imbalance are necessary. For example, Japanese Patent Application Laid-Open Publication No. 2004-350052 discloses a load dispersion method in which a management node apparatus knowing the load at each wireless access point apparatus and the multicast group to which data blocks are transmitted from the wireless access point apparatuses, determines whether there is an imbalance in the loads. If it is determined that there is an imbalance, from among the multicast groups receiving data blocks from the wireless access point apparatus having the greatest load, at least one of the multicast groups is designated by the management node apparatus and the wireless devices (wireless mobile devices) in the designated multicast group(s) are requested to switch connection to the wireless access point apparatus having the least load.

Japanese Patent Application Laid-Open Publication No. S57-210739 discloses a mobile wireless method where a control station controlling base stations (wireless base stations) is provided with a means that detects the utilization rate of each base station and when the utilization rate for a base station exceeds the design rate and a line of a neighboring base station is available, transmits a transmission power control signal to set the changed transmission power of the base station. Each base station is provided with a means to vary the transmission power thereof upon receiving the transmission power control signal. Consequently, for the base station whose transmission power has been varied, range of the service area thereof is varied.

Meanwhile, Japanese Patent Application Laid-Open Publication No. H6-141365 discloses a mobile communication apparatus and discontinuous receiving apparatus. A base station (wireless base station) informs a mobile station in a wireless zone of the base station of the cyclic period of a slot, in the base station, for transmission of information concerning incoming communication. The mobile station (wireless mobile device), based on the notification and allocated category of mobile station itself, variably sets the discontinuous reception period.

Japanese Patent Application Laid-Open Publication No. 2004-350052 only discloses that the connection destination of the wireless mobile device of the multicast group connected to the wireless access point having the greatest load is switched to an access point apparatus having the smallest load and does not recite how the switch is performed. Further, the method disclosed in Japanese Patent Application Laid-Open Publication No. S57-210739 has a disadvantage in that since the transmission power of the wireless base station varies, the wireless area becomes smaller for all of the wireless mobile devices.

### SUMMARY OF THE INVENTION

It is desirable to at least solve the problems in the technologies described above.

A mobile wireless communication system according to one aspect of the present invention includes a wireless base station that controls, for each timing, a transmission state of a radio wave repeatedly transmitted at timings that respectively differ; a plurality of wireless mobile devices that are respectively allocated one of the timings, receive the radio wave at the timing allocated, and based on the radio wave received, respectively detect a connection destination. The wireless base station controls the transmission state of the radio wave transmitted at an arbitrary timing to be any one of a complete suspension state of continuously suspending transmission, a discontinuous suspension state of discontinuously suspending transmission, and an invalid information transmission state of transmitting invalid information.

A wireless base station according to another aspect of the present invention repeatedly transmits, at timings that respectively differ, a radio wave to a plurality of wireless mobile devices. The wireless base station includes: a wireless receiving unit that receives a common channel signal from the wireless mobile devices; a signal processing unit that performs reception processing on the common channel signal received by the wireless receiving unit; an interface that receives a command from a higher-level apparatus; a control unit that controls a transmission state of the radio wave transmitted at an arbitrary timing based on a number of times the control unit receives the common channel signal processed by the signal processing unit or based on the command received from the higher-level apparatus via the interface; and a wireless transmitting unit that transmits the radio wave to the wireless mobile devices based on control by the control unit. The control unit controls the transmission state of the radio wave transmitted at a timing designated by the higher-level apparatus or at a timing corresponding to a wireless mobile device from which a common channel signal has been received for a number of times exceeding a threshold to be in any one of a complete suspension state of continuously suspending transmission, a discontinuous suspension state of discontinuously suspending transmission, and an invalid information transmission state of transmitting invalid information.

The other features and advantages of the present invention are specifically set forth in or will become apparent from the following detailed description of embodiments of the invention when read in conjunction with the accompanying drawings.

### BRIEF DESCRIPTION OF THE DRAWINGS

Fig. 1 is a schematic of a mobile communication system according to an embodiment;
Fig. 2 is a schematic of a configuration of the wireless base station according to the embodiment;
Fig. 3 is a flowchart of operation by a control unit of the wireless base station according to the embodiment;
Fig. 4 is a block diagram of the control unit of the wireless base station according to the embodiment;
Fig. 5 is a block diagram of a wireless transceiving unit;
Fig. 6 is a schematic of an operation example for the mobile communication system according to the embodiment; and
Fig. 7 is a schematic of another operation example of the mobile communication system according to the embodiment.

### DETAILED DESCRIPTION OF THE PREFERRED EMBODIMENTS

Referring to the accompanying drawings, exemplary embodiments according to the present invention are explained in detail below.

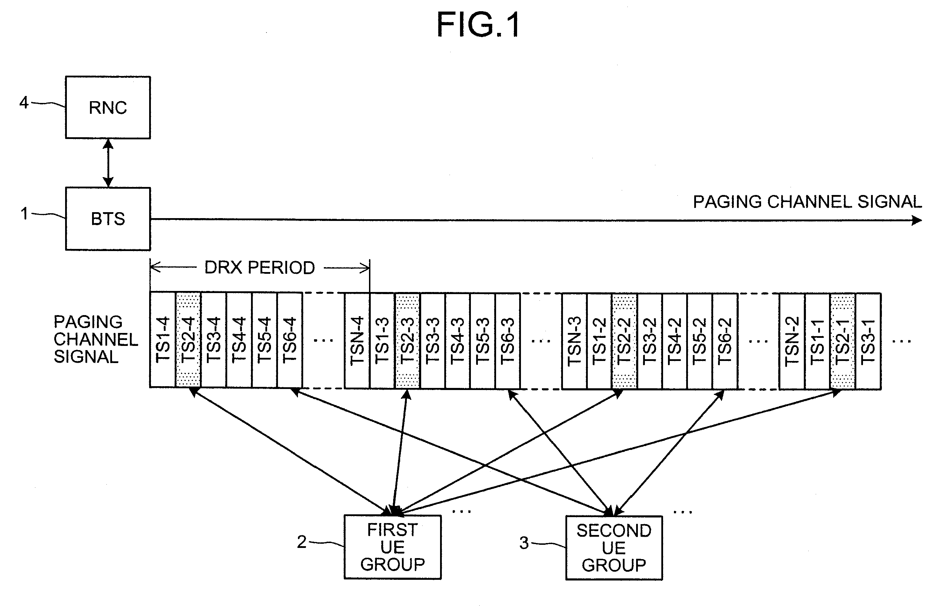

Fig. 1 is a schematic of a mobile communication system according to an embodiment. As depicted in Fig. 1, a base transceiver station (BTS) is a wireless base station; first and second user equipment (UE) groups are different wireless mobile device groups; a radio network controller (RNC) is a wireless control device corresponding to a higher-level apparatus of a wireless base station. Additionally, TSx-y (where, x is a numeral or N representing a numeral, and y is a numeral) respectively indicate time slots (slots) of a paging channel signal. x are numerals corresponding to wireless mobile groups and y are consecutive numerals for each x. A discontinuous receiving (DRX) period is one period of discontinuous reception.

As depicted in Fig. 1, a wireless base station 1 is connected to a wireless control apparatus 4 and transmits a paging channel signal. A wireless mobile device belonging to a first wireless mobile device group 2 receives a radio wave at second slots (TS2-1, TS2-2, TS2-3, TS2-4) allocated to the first wireless mobile device group 2 from among slots of the paging channel signal transmitted from the wireless base station 1, and based on the radio wave received, detects the quality of the radio wave for communication with the wireless base station 1. Similarly, a wireless mobile device belonging to a second wireless mobile device group 3 receives the radio wave at sixth slots (TS6-2, TS6-3, TS6-4) allocated to the second wireless mobile device group 3 from among the slots of the paging channel signal, and detects the quality of the radio wave.

When the wireless base station 1 wants to control the wireless mobile device belonging to the first wireless mobile device group 2 to not reselect the current cell, the wireless base station 1 continuously stops the radio wave at the second slots of the paging channel signal. In other words, the wireless base station 1 suspends transmission of the radio wave at the first-second slot TS2-1, the second-second slot TS2-2, the third-second slot TS2-3, and the fourth-second slot TS2-4. This state is called a complete suspension state. Under a complete suspension state of the second slots, the wireless mobile device belonging to the first wireless mobile device group 2 cannot receive a paging channel signal and therefore determines that in the current cell, there is no radio wave enabling communication with the wireless base station 1 and attempts to move to another cell.

The wireless base station 1, in place of the complete suspension state of the second slots, may discontinuously transmit the radio wave at the second slots, or may discontinuously suspend the radio wave. For example, the wireless base station 1 transmits the radio wave at the first-second slot TS2-1 and the third-second slot TS2-3, and suspends transmission of the radio wave at the second-second slot TS2-2 and the fourth-second slot TS2-4. This state is referred to as a discontinuous suspension state. Under a discontinuous suspension state of the second slots, the wireless mobile device belonging to the first wireless mobile device group 2 is able to occasionally receive and not receive a paging channel signal and therefore, determines that in the current cell, the quality of the radio wave for communicating with the wireless base station 1 is poor and attempts to move to another cell. In place of the complete suspension state and the discontinuous suspension state, the wireless base station 1 may reduce power when transmitting the radio wave at the slots subject to control. Hereinafter, this state is referred to as a low transmission power state.

Alternatively, rather than transmitting valid information for the second slots, the wireless base station 1 may transmit invalid information. This state is referred to as an invalid information transmission state. Invalid information is, for example, information causing cyclic redundancy check (CRC) errors or format errors to occur. Under an invalid information transmission state of the second slots, a wireless mobile device belonging to the first wireless mobile device group 2 receives invalid information as the paging channel signal and because the wireless mobile device cannot receive valid information to check reception, the wireless mobile device determines that in the current cell, the radio wave for communicating with the wireless base station 1 cannot be used and attempts to move to another cell.

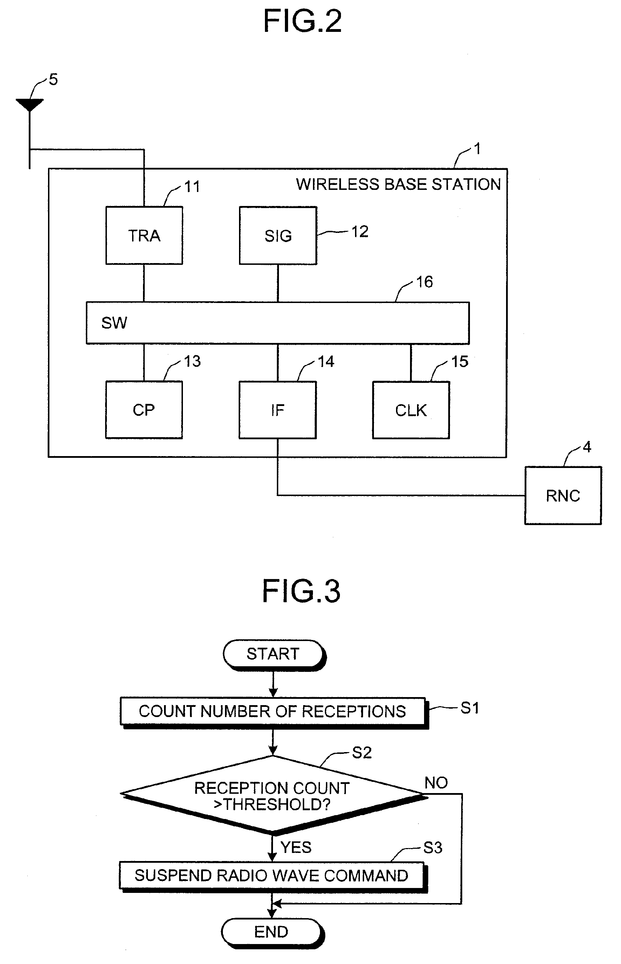

Fig. 2 is a schematic of a configuration of the wireless base station according to the embodiment. TRA depicted in Fig. 2 is a wireless transceiving unit corresponding to a wireless transmitting unit and a wireless receiving unit. SIG is a signal processing unit; CP is a control unit; IF is an interface; CLK is a clock unit; and SW is a selector switch.

As depicted in Fig. 2, at the wireless base station 1, a wireless transceiving unit 11, a signal processing unit 12, a control unit 13, an interface 14, and a clock unit 15 are mutually connected through a selector switch 16. The selector switch 16 switches the signal path between each of the units. The clock unit 15 supplies a clock signal that determines operation timing in each of the units. The wireless transceiving unit 11 is connected to an antenna 5 and through the antenna 5, receives a radio wave including a common channel signal from a wireless mobile device. The wireless transceiving unit 11 further receives a message from the control unit 13 and based on the message, transmits, through the antenna 5 to a wireless mobile device, a radio wave including a paging channel signal.

The signal processing unit 12 performs reception processing of the common channel signal received by the wireless transceiving unit 11. The interface 14 is connected to the wireless control apparatus 4 through a wired transmission path and receives commands from the wireless control apparatus 4. The control unit 13 receives the common channel signal from the signal processing unit 12 after the reception processing. The control unit 13 further receives commands from the wireless control apparatus 4 through the interface 14. The control unit 13, based on the number of receptions of the common channel signal (flow rate) or on a command from the wireless control apparatus 4, transmits a message that controls the transmission state of the radio wave at arbitrary slots of the paging channel signal.

The control unit 13 is described using an example with reference to Fig.1. In the example, the wireless base station 1 receives a suspend radio wave command to suspend transmission of the paging channel signal to the first wireless mobile device group 2. When this command is received, the control unit 13 transmits a message for the suspend radio wave command to set transmission of the radio wave at the second slots TS2-1, TS2-2, TS2-3, TS2-4 of the paging channel signal to a complete suspension state, a discontinuous suspension state, a low transmission power state, or an invalid information transmission state. If the wireless base station 1 manages plural cells, the suspend radio wave command from the wireless control apparatus 4 and the suspend radio wave command transmitted by the control unit 13 include information designating the cell subject to the command.

The wireless transceiving unit 11, upon receiving a message for the suspend radio wave command from the control unit 13 with respect to the second slots of the paging channel signal, sets the radio wave at the second slots TS2-1, TS2-2, TS2-3, TS2-4 to a complete suspension state, a discontinuous suspension state, a low transmission power state, or an invalid information transmission state. The state to which transmission of the radio wave is set is predetermined, at the time of design, by the specifications of the wireless base station 1. According to the specifications, the wireless transceiving unit 11 sets the radio wave at the second slots TS2-1, TS2-2, TS2-3, TS2-4 to a complete suspension state, a discontinuous suspension state, a low transmission power state, or an invalid information transmission state and transmits a paging channel signal. When the control unit 13 controls the paging channel signal based on the number of receptions of the common channel signal, operation is as follows.

Fig. 3 is a flowchart of operation by the control unit of the wireless base station according to the embodiment. The control unit 13 counts the number of times the common channel signal is received for each wireless mobile device group (step S1). The control unit 13 compares the number of receptions counted for each wireless mobile device group and a preset threshold (step S2). With reference to the example of Fig. 1, if the comparison result indicates that the number of the common channel signals received from the first wireless mobile device group 2 exceeds the threshold (step S2: YES), the control unit 13 transmits a message for a command to suspend the radio wave to the first wireless mobile device group 2, i.e., a message for a suspend radio wave command with respect to the second slots TS2-1, TS2-2, TS2-3, TS2-4 of the paging channel signal (step S3).

Consequently, the wireless transceiving unit 11 sets the radio wave at the second slots TS2-1, TS2-2, TS2-3, TS2-4 to a complete suspension state, a discontinuous suspension state, a low transmission power state, or an invalid information transmission state and transmits a paging channel signal. Meanwhile, at step S2, if the number of common channel signals received from the first wireless mobile device group 2 does not exceed the threshold (step S2: NO), the control unit 13 does not transmit a message for a suspend radio wave command. Accordingly, the wireless transceiving unit 11 sets the radio wave at the second slots TS2-1, TS2-2, TS2-3, TS2-4 to be in an ordinary transmission state and transmits a paging channel signal.

Here, the threshold at step S2 includes a second threshold that is lower than a first threshold. The first threshold is a threshold for switching the radio wave at a concerned slot from an unsuspended state to a suspended state. The second threshold is a threshold for releasing the radio wave at a concerned slot from a suspended state to switch the radio wave to an unsuspended state. Determination using the second threshold is made with respect to a total value for the wireless mobile device groups, not for each wireless mobile device group. When plural wireless mobile device groups are in a suspended state, the release of the suspended state includes sequential release according to reception count beginning from the group having the smallest reception count before the suspension or chronological release beginning from the group first suspended. At step S2, a case when the number of common channel signals received from a wireless mobile device group exceeds a threshold, includes a case where the number exceeds the first threshold while the radio wave at the concerned slot is in an unsuspended state and a case where the number does not fall below the second threshold while the radio wave at the concerned slot is in a suspended state. Additionally, at step S2, a case when the number of common channel signals received from a wireless mobile device group does not exceed a threshold includes a case where the number does not exceed the first threshold while the radio wave at the concerned slot is in an unsuspended state and a case where the number falls below the second threshold while the radio wave at the concerned slot is in a suspended state. The count value indicative of the number of times the common signal is received may be initialized, e.g., cleared to zero, according to a given condition. The condition may be, for example, initializing at fixed time intervals or initializing when the number of common signals received from another wireless mobile device group exceeds the threshold. Additionally, when the following conditions are satisfied, the state of the radio wave may be restored from the suspended state. Such conditions include, the elapse of a fixed time interval beginning from the suspension of the radio wave, the number of mobile wireless devices within a cell falling below a threshold, and the common channel signal within a cell being received for a total number of times that falls below a threshold.

The control unit 13 may have any one of the functions of, 1) controlling the radio wave at a particular slot based on a suspend radio wave command from the wireless control apparatus 4, and 2) controlling the radio wave at a particular slot based on the number of receptions of the common channel signal. If the control unit 13 has both of the functions, when the control unit receives a suspend radio wave command from the wireless control apparatus 4 and/or the reception count for the common channel signal exceeds the threshold, the control unit 13 controls the radio wave at the concerned slot.

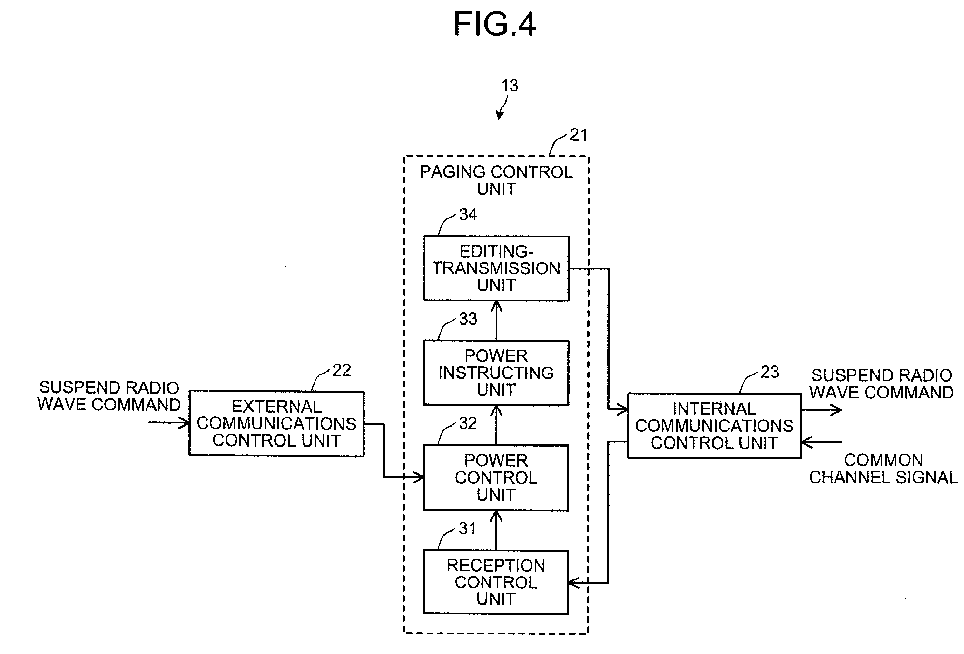

Fig. 4 is a block diagram of the control unit of the wireless base station according to the embodiment. Only parts related to the control of the radio wave at an arbitrary slot of the paging channel signal are depicted in Fig. 4. As depicted in Fig. 4, the control unit 13 includes a paging control unit 21, an external communications control unit 22, and an internal communications control unit 23. The paging control unit 21 includes a reception control unit 31, a power control unit 32, a power instructing unit 33, and an editing-transmission unit 34. The external communications unit 22 receives a suspend radio wave command from the wireless control apparatus 4. The internal communications control unit 23 receives a common channel signal from a wireless mobile device. The reception control unit 31 receives the common channel signal from the internal communications control unit 23 and performs the operations explained with reference to Fig. 3 (steps S1 to S3).

The power control unit 32 can control the transmission power for each of the slots of the paging channel signal. When the reception count for the common channel signal exceeds the threshold, or when a suspend radio wave command is received from the external communications control unit 22, the power control unit 32 sets the transmission power of the slots concerned. If the radio wave at the slots is to be set to a complete suspension state, the transmission power of the slots is set to be, for example, zero continuously until the complete suspension state is released. If the radio wave at the slots is to be set to a discontinuous suspension state, the transmission power of the slots is set to be, for example, zero discontinuously until the discontinuous suspension state is released. If the radio wave at the slots is to be set to a low transmission power state, the transmission power of the slots is set to a power level lower than usual until the low transmission power state is released. If the radio wave at the slots is to be set to an invalid information transmission state, the transmission power of the slots is set to, for example, the usual power level until the invalid information transmission state is released. The power level of other slots is set to, for example, the usual power level.

The power instructing unit 33 receives, from the power control unit 32, control details for the transmission power and based on the control details, gives instruction concerning the power for transmission to the wireless mobile device(s). Based on the control details from the power control unit 32 and instruction details from the power instructing unit 33, the editing-transmission unit 34, edits transmission information and gives instruction for the transmission of information including the suspend radio wave command for the slot(s) concerned. The information including the suspend radio wave command is transmitted from the internal communications control unit 23 to the wireless transceiving unit 11. The control unit 13 may additionally include a unit that sets the wireless channel for a transmission signal and a unit that makes associations with links on the wired side.

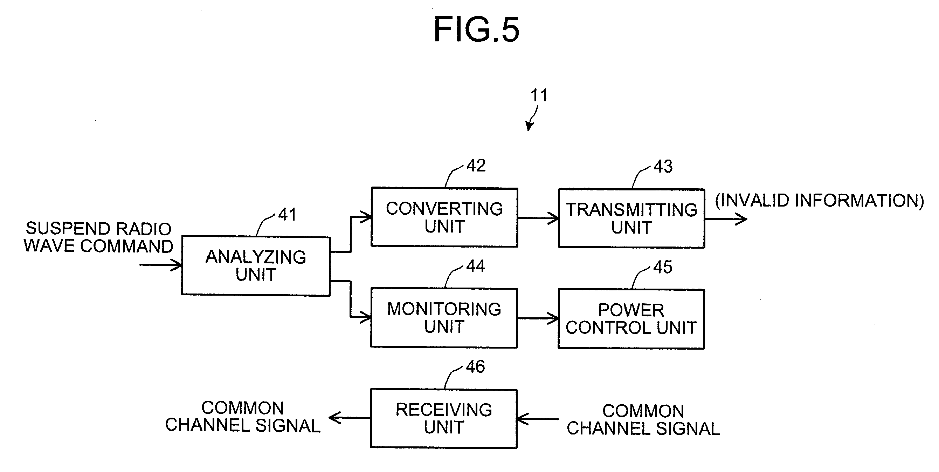

Fig. 5 is a block diagram of the wireless transceiving unit. Only parts related to the control of the radio wave at an arbitrary slot of the paging channel signal are depicted in Fig. 5. As depicted in Fig. 5, the wireless transceiving unit 11 includes an analyzing unit 41, a converting unit 42, a transmitting unit 43, a monitoring unit 44, a power control unit 45, and a receiving unit 46. The analyzing unit 41 receives a control signal including a suspend radio wave command from the control unit 13 and analyzes the signal. When the analysis results indicate the radio wave at a slot is to be set to an invalid information transmission state, the converting unit 42 performs signal conversion so that the information for the slot is invalid information. The transmitting unit 43 transmits to the wireless mobile device, the paging channel signal including the invalid information converted by the converting unit 42.

Meanwhile, when the radio wave at the slot is to be set to a complete suspension state, the monitoring unit 44 monitors the transmission signal. The power control unit 45 suspends transmission of the radio wave at the slot. Concerning operation when the radio wave at the slot is to be set to a discontinuous suspension state, operation when the radio wave at the slot is suspended is identical to that for the complete suspension state, and operation when the radio wave at the slot is transmitted is identical to that for usual operation. Further, with the exception of the transmission power being relatively lower, operation when the radio wave at the slot is to be in a low transmission power state is identical to the usual operation for transmitting the radio wave at the slot.

The receiving unit 46 receives a common channel signal from a wireless mobile device and transmits the common channel signal to the signal processing unit 12. The wireless transceiving unit 11 additionally includes a unit that controls radio frequency, and a unit that monitors the signal received.

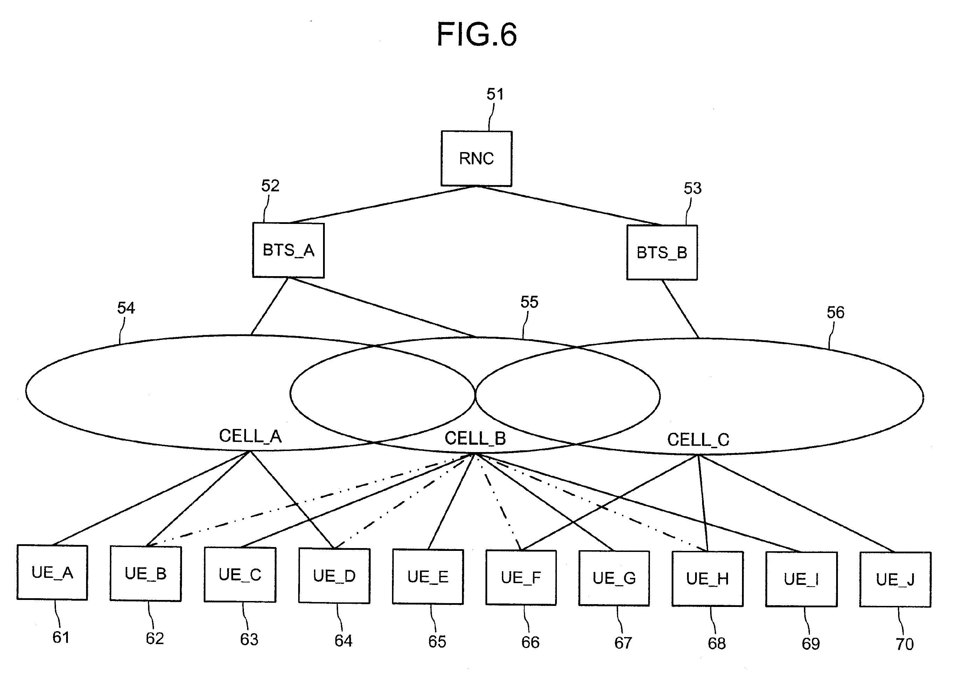

Fig. 6 is a schematic of an operation example for the mobile communication system according to the embodiment.

As depicted in Fig. 6, a BTS_A and a BTS_B are different wireless base stations; cell_A, cell_B, and cell_C are different cells; and UE_A to UE_J are different wireless mobile devices. A wireless base station A52 and a wireless base station B53 are managed by a wireless control apparatus 51. The wireless base station A52 manages cells A54 and B55. The wireless base station B53 manages a cell C56. The cell B55 overlaps the cell A54 and the cell C56, and does not have an area that does not overlap another cell.

The initial state is as follows. For example, a wireless mobile device A61 is in the cell A54. A wireless mobile device J70 is in the cell C56. Excluding wireless mobile devices A61 and J70, all other wireless mobile devices (B62 to I69) are in the cell B55. In this state, the number of wireless mobile devices occupying the cell B55 is great. Consequently, when the wireless base station A52 transmits a paging channel signal to the wireless mobile devices in the cell B55, the wireless base station A52 sets the radio wave at the slots allocated to the group to which the wireless mobile devices B62, D64, F66, and H68 belong to a complete suspension state.

Thus, the wireless mobile devices B62, D64, F66, and H68 determine that the paging channel signal to the cell B55 has disappeared and perform cell reselection. Here, as the cell B55 cannot be reselected, the cell A54 or the cell C56 is selected. In the example of Fig. 6, the wireless mobile devices B62 and D64 select the cell A54, while the wireless mobile devices F66 and H68 select the cell C56.

In Fig. 6, dashed-two dotted lines connecting the wireless mobile devices B62, D64, F66, and H68 with the cell B55 indicate a connection state before cell reselection. Further, solid lines connecting the wireless mobile devices B62, D64, F66, and H68 with the cell A54 or the cell C56 indicates a connection state after cell reselection. In place of a complete suspension state, a discontinuous suspension state, a low transmission power state, or an invalid information transmission state may be set. When an invalid information transmission state is selected, a drastic power level change is not required. Accordingly, the invalid information transmission state is suited for a low-cost system for which high-speed response of hardware is not demanded. In contrast, the complete suspension state and the discontinuous suspension state are suited for cases where high-speed response of hardware is demanded.

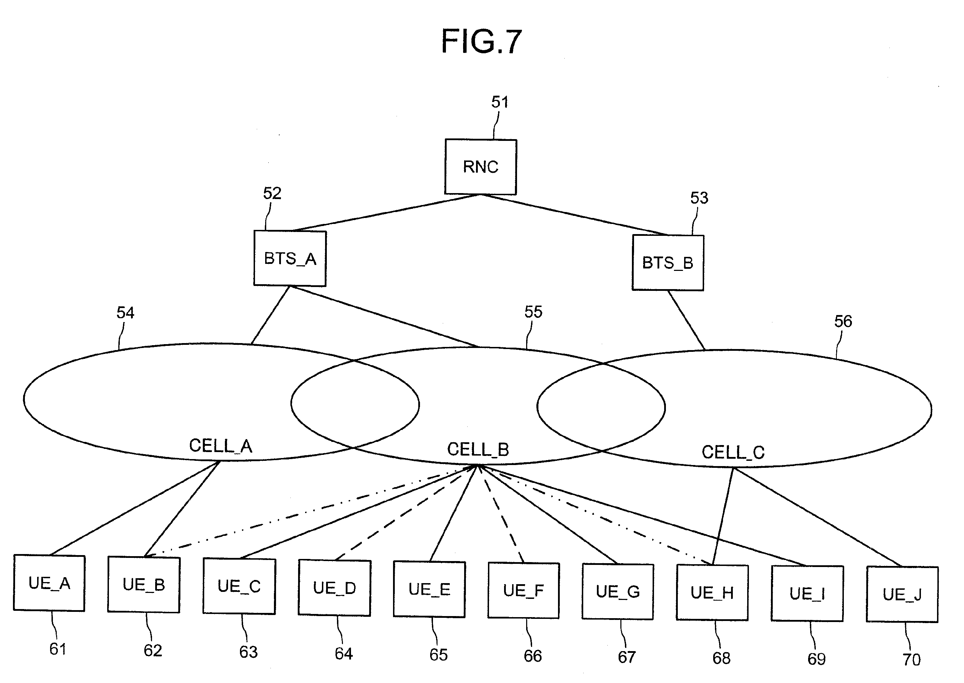

Fig. 7 is a schematic of another operation example of the mobile communication system according to the embodiment. According to a second operation example, overlap of the cell B55 with the cells A54 and C56 is not sufficient, and the cell B55 has an area that does not overlap with another cell. The initial state is identical to a first operation example above. In the second operation example, when the wireless base station A52 transmits a paging channel signal to wireless mobile devices in the cell B55, the wireless base station A52 sets the radio wave at the slots allocated to the group to which the wireless mobile devices B62, D64, F66, and H68 belong to a discontinuous suspension state.

Consequently, the wireless mobile devices B62, D64, F66, and H68 determine the quality of the radio wave of the paging channel signal in the cell B55 to be poor, perform cell reselection, and attempt to move to the cell A54 or the cell C56. In the example of Fig. 7, the wireless mobile device B62 is able to move to the cell A54; however, the wireless mobile device D64 is unable to move to either the cell A54 or C56, and attempts to reselect the original cell B55. In other words, the wireless mobile device D64 remains in the cell B55. Further, the wireless mobile device H68 is able to move to the cell C56; however, the wireless mobile device F66 is unable to move to either the cell A54 or C56, and remains in the original cell B55.

In Fig. 7, dashed lines connecting the wireless mobile devices D64 and F66 with the cell B55 indicate a state where as a result of cell reselection, being unable to move to another cell, the wireless mobile devices D64 and F66 are connected with the original cell. In place of a discontinuous suspension state, a low transmission power state or a discontinuous invalid information transmission state may be set. As indicated by the second operation example, when there is insufficient cell overlap, a complete suspension state for the radio wave at the slots of the paging channel signal is undesirable. The reason is that for the complete suspension state, the wireless mobile devices cannot remain in the original cell and without being able to establish a connection with another cell, the connection between the wireless mobile devices and the wireless base station is cut. However, to make it impossible for some of the wireless mobile devices to connect with the cell B55 in order to maintain security of the system, a complete suspension state can be selected.

As described above, according to an aspect of the embodiments, when it is desirable for a wireless mobile device to move from the current cell to another cell, the wireless mobile device can be caused to recognize that the radio wave of the current cell has disappeared, the quality of the radio wave of the current cell is poor, and/or the radio wave of the current cell cannot be used; thus, the wireless mobile device can be prevented from reselecting the current cell, i.e., cell reselection of the wireless mobile device can be controlled.

Further, compared with preventing a wireless mobile device from reselecting the current cell by trigger information, etc., as cell reselection can be controlled for each wireless mobile device, cell reselection can be accomplished with less trigger information. Accordingly, power consumption of the wireless mobile device can be reduced. Further, less trigger information enables cell reselection to be performed swiftly. Additionally, without increasing wireless mobile device function, cell reselection of the wireless mobile device can be controlled.

Furthermore, with respect to an arbitrary wireless mobile device group, cell reselection by a wireless mobile device belonging to the wireless mobile device group can be controlled without reducing the scale of the cell. Because the timing of cell reselection can be staggered according to the wireless mobile device group, a focus on position registration can be prevented. Additionally, when cells have a hierarchical structure, the wireless mobile device can be made to select a cell at an appropriate level.

As described above, the mobile wireless communication system and the wireless base station according to the embodiments, with respect to wireless mobile devices performing DRX for power saving, transmit a radio wave for the wireless mobile devices to perform a reception check. The timing of transmission is different for each of the wireless mobile devices. To prevent certain wireless mobile devices from reselecting the current cell, the mobile wireless communication system and the wireless base station continuously suspend or discontinuously suspend transmission of the radio wave at the times allocated to the wireless mobile devices or transmit invalid information to the wireless mobile devices.

According to the mobile wireless communication system and the wireless base station, a wireless mobile device, to which a radio wave for checking reception is continuously or discontinuously suspended, determines the quality of the radio wave in the current cell to be poor and attempts to move to another cell. The same is true for a wireless mobile device to which invalid information is transmitted. In attempting to move to another cell, the wireless mobile device receives, in a candidate cell, a radio wave for checking reception and if the quality of the radio wave is within a tolerable range, the wireless mobile device moves to the cell.

Although the invention has been described with respect to a specific embodiment for a complete and clear disclosure, the appended claims are not to be thus limited but are to be construed as embodying all modifications and alternative constructions that may occur to one skilled in the art which fairly fall within the basic teaching herein set forth.

In any of the above aspects, the various features may be implemented in hardware, or as software modules running on one or more processors. Features of one aspect may be applied to any of the other aspects.

The invention also provides a computer program or a computer program product for carrying out any of the methods described herein, and a computer readable medium having stored thereon a program for carrying out any of the methods described herein. A computer program embodying the invention may be stored on a computer-readable medium, or it could, for example, be in the form of a signal such as a downloadable data signal provided from an Internet website, or it could be in any other form.

## Claims

1. A mobile wireless communication system comprising:
a wireless base station that controls, for each timing, a transmission state of a radio wave repeatedly transmitted at timings that respectively differ; and
a plurality of wireless mobile devices that are respectively allocated one of the timings, receive the radio wave at the timing allocated, and based on the radio wave received, respectively detect a connection destination, wherein
the wireless base station controls the transmission state of the radio wave transmitted at an arbitrary timing to be any one of a complete suspension state of continuously suspending transmission, a discontinuous suspension state of discontinuously suspending transmission, and an invalid information transmission state of transmitting invalid information.

2. The mobile wireless communication system according to claim 1, wherein the wireless base station controls the transmission state of the radio wave transmitted at a timing designated by a higher-level apparatus or at the timing allocated to a wireless mobile device from which a common channel signal has been received for a number of times exceeding a threshold to be in any one of the complete suspension state, the discontinuous suspension state, and the invalid information transmission state.

3. A wireless base station that repeatedly transmits, at timings that respectively differ, a radio wave to a plurality of wireless mobile devices, the wireless base station comprising:
a wireless receiving unit that receives a common channel signal from the wireless mobile devices;
a signal processing unit that performs reception processing on the common channel signal received by the wireless receiving unit;
an interface that receives a command from a higher-level apparatus;
a control unit that controls a transmission state of the radio wave transmitted at an arbitrary timing based on a number of times the control unit receives the common channel signal processed by the signal processing unit or based on the command received from the higher-level apparatus via the interface; and
a wireless transmitting unit that transmits the radio wave to the wireless mobile devices based on control by the control unit, wherein
the control unit controls the transmission state of the radio wave transmitted at a timing designated by the higher-level apparatus or at a timing corresponding to a wireless mobile device from which a common channel signal has been received for a number of times exceeding a threshold to be in any one of a complete suspension state of continuously suspending transmission, a discontinuous suspension state of discontinuously suspending transmission, and an invalid information transmission state of transmitting invalid information.
